# EUROPÄISCHE PATENTANMELDUNG

(11) **EP 4 725 732 A1**
(43) Veröffentlichungstag der Anmeldung: **15.04.2026**
(21) Anmeldenummer: 25195657.9
(22) Anmeldetag: 13.08.2025
(51) Int. Cl.: B60K 1/04, B60K 15/063

(54) **MODULEINHEIT FÜR ELEKTROFAHRZEUGE**

(30) Priorität: 11.10.2024 DE 202024105853 U
(71) Anmelder: Bruhnke, Ulrich, 71139 Ehningen (DE)
(72) Erfinder: Bruhnke, Ulrich, 71139 Ehningen (DE)
(74) Vertreter: Helge, Reiner

(57) **Zusammenfassung**

Moduleinheit für Elektrofahrzeuge, die von mindestens einem Elektromotor angetrieben werden, dessen elektrische Energie aus einem elektrischen Speicher (Akku) und durch Umwandlung eines zusätzlich mitgeführten Kraftstoffs bezogen wird, ist entweder kastenförmig ausgebildet und umfasst im Inneren mindestens zwei Kammern, wobei in einer der Kammern (10) Batteriemodule (5) und in den weiteren der Kammern eine Verbrennungskraftmaschine/Generatoreinheit (7,8) und/oder ein Kraftstofftank (8) angeordnet sind, die einzelnen Kammern der Moduleinheit (2) untereinander fluid- und/oder gasdicht ausgebildet sind und den Kraftstofftank (6) zusammen mit den Batteriemodulen (5) und die Verbrennungskraftmaschine/ Generatoreinheit (7,8) vollständig umschließt oder ist rahmenförmig ausgebildet, wobei mindestens eine geschlossene Kammer zur Aufnahme von Batteriemodulen (5) und ein offener Bereich vorgesehen ist, und im offenen Bereich der Moduleinheit (2) eine Verbrennungskraftmaschine/Generatoreinheit (7,8) und/oder ein Kraftstofftank (8) angeordnet sind.

## Beschreibung

Die vorliegende Erfindung betrifft eine Moduleinheit für Elektrofahrzeuge, die von mindestens einem Elektromotor angetrieben werden, dessen elektrische Energie aus einem elektrischen Speicher (Akku) und durch Umwandlung eines zusätzlich mitgeführten Kraftstoffs bezogen wird, und ein damit ausgerüstetes Fahrzeug. Als Fahrzeuge im Sinne der vorliegenden Erfindung sind sämtliche mit einem Elektromotor angetriebenen Fahrzeuge, wie z.B. Personenkraftwagen, Lastkraftwagen, Busse, Motorräder, Eisenbahnen, Schiffe und andere vergleichbare Fahrzeuge, zu verstehen.

Der Entwicklung von straßengebundenen Fahrzeugen mit reinem Elektroantrieb oder gemischten Antrieben mit Elektromotor und Verbrennungskraftmaschine wird derzeit weltweit große Aufmerksamkeit zuteil. Dies liegt an den Bemühungen, die SchadstoffEmissionen, die vom derzeitigen Straßenverkehr ausgehen und insbesondere den Ausstoß von CO₂ zu reduzieren. Dabei steht der Wunsch im Vordergrund, innerhalb der Städte vollständig emissionsfrei mit Elektroantrieb fahren zu können.

Hochvoltspeichersysteme und Kraftstoffversorgungsanlagen werden beispielsweise in elektrifizierten bzw. hybridisierten Kraftfahrzeugen eingesetzt. Ein Hochvoltspeichersystem und eine Kraftstoffversorgungsanlage weisen neben den Speicherzellen und dem Betriebsmittelbehälter zahlreiche weitere Komponenten auf. Durch den Einbau aller Bauteile des Hochvoltspeichersystems und der Kraftstoffversorgungsanlage in u.a. für den Fahrzeugbenutzer relevantem Bauraum (z.B. Fahrgastinnenraum, Kofferraum) wird dieser dezimiert. Alle diese Bauteile weisen eigene Gehäuse auf und werden separat an das Kraftfahrzeug montiert.

Die DE 10 2018 130 506 A1 betrifft eine Batterieeinheit für ein Hybridfahrzeug, welche ein Batteriegehäuse, welches eine in Richtung Frontseite des Hybridfahrzeugs gerichtete Frontseitenwand und eine in Richtung Heckseite des Hybridfahrzeugs gerichtete Heckseitenwand aufweist, und mindestens ein in dem Batteriegehäuse angeordnetes Batteriemodul aufweist. Ferner betrifft die Erfindung ein Hybridfahrzeug mit einer derartigen Batterieeinheit. Die Batterieeinheit zeichnet sich dadurch aus, dass in dem Batteriegehäuse mindestens ein Kraftstofftank, in welchem der Kraftstoff für den verbrennungsmotorischen Antrieb des Hybridfahrzeugs gespeichert ist, angeordnet ist. Die Batteriemodule und der Kraftstofftank sind somit in ein und demselben Gehäuse, dem Batteriegehäuse, angeordnet.

Die DE 10 2018 211 222 A1 betrifft eine Baugruppe für ein Kraftfahrzeug. Die Baugruppe umfasst mindestens einen Betriebsmittelbehälter zur Speicherung von unter Umgebungsbedingungen flüssigen Betriebsmitteln und mindestens eine Energiespeichereinrichtung zur Speicherung von elektrischer Energie, wobei die Energiespeichereinrichtung mindestens ein Speichergehäuse aufweist, wobei mindestens eine mit dem Betriebsmittelbehälter fluidverbundene bzw. fluidverbindbare Medienleitung zumindest teilweise im Speichergehäuse aufgenommen ist.

Die DE 10 2018 211 225 A1 betrifft eine Baugruppe für ein Kraftfahrzeug, umfassend mindestens einen Betriebsmittelbehälter zur Speicherung von unter Umgebungsbedingungen flüssigen Betriebsmitteln und mindestens eine Energiespeichereinrichtung zur Speicherung von elektrischer Energie, umfassend eine Kühleinrichtung mit mindestens einem Kühlelement zur gemeinsamen Kühlung des Betriebsmittelbehälters und der Energiespeichereinrichtung.

Die DE 10 2020 003 433 B3 offenbart eine Karosserietragstruktur für ein Fahrzeug, mit zwei in Fahrzeugquerrichtung voneinander beabstandeten Seitenschwellern, welche jeweils einen in Fahrzeugquerrichtung nach außen durch eine Außenwandung, in Fahrzeugquerrichtung nach innen durch eine Innenwandung, in Fahrzeughochrichtung nach oben durch einen Obergurt und in Fahrzeughochrichtung nach unten durch einen Untergurt des jeweiligen Seitenschwellers begrenzten Hohlraum aufweisen, in welchem wenigstens ein separat von dem jeweiligen Seitenschweller ausgebildetes Verstärkungselement angeordnet ist. Die Karosserietragstruktur weist einen zwischen den Seitenschwellern angeordneten und an die Seitenschweller angebundenen Boden und einen unter dem Boden angeordneten Energiespeicher zum Speichern von elektrischer Energie und/oder eines Kraftstoffes zum Antreiben des Fahrzeugs auf.

Die DE 10 2011 115 570 A1 beschreibt einen Schlepper mit unterschiedlicher Energiequelle, insbesondere einen Vorfeld-Schlepper, umfassend wenigstens einen Elektromotor zum Betreiben der angetriebenen Räder mit einem Energie-Fach, einen Batteriepack in der Größe des Energie-Fachs und einer Brennstoffzelle in der Größe des Energie-Fachs.

Die DE 19832 873 A1 betrifft ein Elektrofahrzeug mit einer oder mehreren separaten Energieversorgungseinheiten zur Lieferung von elektrischer Energie für die Energieversorgung des Elektrofahrzeugs, wobei mindestens eine der Energieversorgungseinheiten als kompaktes Modul auf dem Fahrzeugdach abnehmbar angeordnet ist. Es handelt sich um eine Zusatzenergieversorgungseinheit, die neben der Hauptenergieversorgungseinheit, die sich im Inneren des Fahrzeuges befindet, vorhanden ist.

Die DE 10 2019 121 671 A1 offenbart eine Energieversorgungseinheit und ein Kraftfahrzeug mit einer elektrischen Energiespeichereinrichtung, einen thermophotovoltaischen Generator, einen Speichervolumen zum Speichern von Brennstoff und mit einem diese Komponenten umschließenden Gehäuse.

Gleichwohl ist die Reichweite eines batteriebetriebenen Elektrofahrzeugs und des hohen Energieverbrauchs des Elektrofahrzeugs selbst im Allgemeinen geringer als die eines herkömmlichen Fahrzeugs mit Verbrennungsmotor mit gleichwertiger Leistung, weshalb das Elektrofahrzeug häufige Ladevorgänge der Batterien erforderlich macht.

Das Problem aller reinen Elektrofahrzeuge ist derzeit die Reichweite aufgrund der begrenzten Kapazität der Batterien als Energiequelle und insbesondere das hohe Gewicht der Batterien. Batterieelektrische Fahrzeuge sind aufgrund der hohen Masse der Batterie sehr schwer. Der Wunsch nach einer großen Reichweite erfordert noch größere und schwerere Batterien. Auch bei der Verwendung von Hochleistungsbatterien ist es aufwendig, eine Reichweite von mehreren 100 km zu erzielen. Der Einsatz eines batteriebetriebenen Elektrofahrzeugs ist also nicht sehr benutzerfreundlich, vor allem für lange Strecken, weil mehrfache Aufenthalte an Ladestationen erforderlich sein können.

Eine andere Bauart von Fahrzeugen mit kombiniertem Antrieb sind die sogenannten Voll-Hybrid-Fahrzeuge. Hybridfahrzeuge, die konfiguriert sind, eine externe Leistungsversorgung des Zuführens von elektrischer Leistung zu einer elektrischen Vorrichtung und dergleichen außerhalb des Fahrzeugs konfiguriert sind, sind bekannt. Einige dieser Hybridfahrzeuge können nicht nur elektrische Leistung, die in einer im Fahrzeug eingebauten Batterie gespeichert sind, sondern ebenfalls elektrische Leistung zuführen, die durch einen Leistungsgenerator unter Verwendung von Bewegungsleistung einer Kraftmaschine erzeugt wird.

Batterie-Elektrische Fahrzeuge "BEV" haben nicht den für Verbrenner typischen Motorraum, sondern einen Bauraum für Batterien und elektrisch angetriebene Achsen. BEV mit Range-Extender bzw. serielle Hybridfahrzeuge haben das Problem der Unterbringung des Verbrennungsmotors.

Der Erfindung liegt die Aufgabe zugrunde, eine Moduleinheit für ein Elektrofahrzeug zur Verfügung zu stellen, das von mindestens einem Elektromotor angetrieben wird, dessen elektrische Energie aus einem elektrischen Speicher (Akku) und durch Umwandlung eines zusätzlich mitgeführten Kraftstoff bezogen wird, und ein damit ausgerüstetes Fahrzeug, mit einer besonders platzsparenden Anordnung von Batterieeinheit für den elektrischen Antrieb des Fahrzeugs zusammen mit dem verbrennungskraftmotorischen Antrieb eines Generators. Weiterhin sollen die Ladevorgänge an externen Ladeeinrichtungen auf ein Minimum reduziert werden.

Die Aufgabe wird erfindungsgemäß mit den Merkmalen der unabhängigen Ansprüche gelöst. Zweckmäßige Ausgestaltungen und vorteilhafte Weiterbildungen der Erfindung sind in den Unteransprüchen angegeben.

Durch die Erfindung wird eine Moduleinheit für Elektrofahrzeuge, die von mindestens einem Elektromotor angetrieben werden, dessen elektrische Energie aus einem elektrischen Speicher (Akku) und durch Umwandlung eines zusätzlich mitgeführten Kraftstoffs bezogen wird, bereitgestellt. Die Moduleinheit ist kastenförmig ausgebildet und umfasst im Inneren mindestens zwei Kammern , wobei in einer der Kammern Batteriemodule und in den weiteren der Kammern eine Verbrennungskraftmaschine/Generatoreinheit und/oder ein Kraftstofftank angeordnet sind, die einzelnen Kammern der Moduleinheit untereinander fluid- und/oder gasdicht ausgebildet sind und den Kraftstofftank zusammen mit den Batteriemodulen und die Verbrennungskraftmaschine/ Generatoreinheit vollständig umschließen. Alternativ dazu kann die Moduleinheit für Elektrofahrzeuge, die von mindestens einem Elektromotor angetrieben werden, dessen elektrische Energie aus einem elektrischen Speicher (Akku) und durch Umwandlung eines zusätzlich mitgeführten Kraftstoffs bezogen wird, rahmenförmig ausgebildet sein und mindestens eine geschlossene Kammer zur Aufnahme von Batteriemodulen aufweist und im offenen Bereich der Moduleinheit eine Verbrennungskraftmaschine/Generatoreinheit und/oder ein Kraftstofftank angeordnet sind.

Wird die Moduleinheit bzw. die Kammer zur Aufnahme von Batteriemodulen mediendicht gegenüber Gasen und Flüssigkeiten ausgeführt, so kann auch der Eintritt von Luftfeuchtigkeit vermieden werden. Damit wird die Bildung von Kondensationsfeuchte und damit die Gefahr von Korrosion und Kurzschlüssen innerhalb der Kammer für die Batteriemodule verhindert.

Im Weiteren kann die Moduleinheit auch vorzugsweise derart ausgebildet sein, dass es neben den Batteriemodulen, den verbrennungskraftmotorischen Antrieb für den Generator und den Generator, die zusammen eine Verbrennungskraftmaschine/ Generatoreinheit bilden, auch einen Kraftstofftank umfasst, wobei diese den Kraftstofftank zusammen mit den Batteriemodulen und den verbrennungskraftmotorischen Antrieb eines Generators und den Generator vollständig umschließt. Die Batteriemodule und der Kraftstofftank sind vorzugsweise hintereinander in der Moduleinheit angeordnet.

Der elektromotorische Antrieb des Fahrzeugs kann als Front- oder Heckantrieb mit jeweils einem Elektromotor oder mit einem Elektromotor je Achse erfolgen. Auch ein Antrieb mit elektrischen Radmotoren ist möglich. In jedem Fall wird die benötigte elektrische Energie durch die Moduleinheit bereitgestellt.

Die Verbrennungskraftmaschine der Verbrennungskraftmaschine/Generatoreinheit kann als fremdgezündete Hubkolben-Brennkraftmaschine, als Rotationskolben-Brennkraftmaschine oder als Gasturbine ausgebildet sein. Bevorzugt wird eine Ausführung als flachbauender Zweizylinder-Boxermotor, arbeitend im Zweitakt- oder Viertaktverfahren.

Bei Verwendung von Gasturbinen zur Erzeugung elektrischer Energie in Elektrofahrzeugen mit größerer Reichweite ist der Nachteil der statischen Effizienz weniger wichtig, da die Gasturbine mit oder nahe der maximalen Leistung betrieben werden kann und einen Generator antreibt, der je nach Geschwindigkeit und Batteriezustand entweder Strom für die Elektromotoren oder für die Batterien erzeugt. Die Batterien fungieren als "Puffer" (Energiespeicher), indem sie die erforderliche Energiemenge an die Elektromotoren liefern, wodurch die Gasannahme der Gasturbine irrelevant wird.

Darüber hinaus ist kein großes Getriebe oder ein Getriebe mit variabler Drehzahl erforderlich. Da ein Generator vergleichsweise schnell läuft, kann ein kleinerer und leichterer Generator verwendet werden, als dies sonst der Fall wäre. Das bessere Leistungsgewicht der Gasturbine und ihres Getriebes mit fester Drehzahl ermöglicht eine viel leichtere Antriebsmaschine. Dadurch können wiederum schwerere Batterien mitgeführt werden, was eine größere Reichweite im rein elektrischen Betrieb ermöglicht.

Die Moduleinheit kann in den Elektrofahrzeugen unterflur zwischen den Längsträgerstrukturen der Unterbodenstruktur bzw. im Unterbodenbereich des Elektrofahrzeuges zwischen Vorder- und Hinterachse angeordnet sein. Ebenso ist es möglich, die Moduleinheit im Frontbereich oder im Heckbereich des Elektrofahrzeuges anzuordnen.

Die optimale Effizienz von Batterien liegt innerhalb eines gewissen Temperaturbereichs. Bei sehr niedrigen Temperaturen steigen die internen Widerstände einer Batterie im Allgemeinen an. Dies führt oftmals zu einer entsprechenden Reduzierung der Reichweite eines Elektrofahrzeugs. Aus diesem Grund werden Batterien in Elektrofahrzeugen oftmals einer Temperatursteuerung ausgesetzt, bevor das Elektrofahrzeug gestartet wird.

Der Moduleinheit ist eine Temperiereinrichtung zur Kühlung oder bei Bedarf auch zur Beheizung der Batteriemodule zugeordnet, wobei den Batteriemodulen Temperatursensoren zugeordnet sind, die mit einem Steuermodul für die Temperiereinrichtung gekoppelt sind. Des Weiteren kann in einer der Kammern der Moduleinheit ein thermischer Speicher, insbesondere Wärme- und/oder Kältespeicher angeordnet sein, der bei Bedarf zur Temperierung der Batteriemoduls zuschaltbar ist.

Die Temperiereinrichtung kann innerhalb wenigstens einer Kammer angeordnete Kühlplatten enthalten. Es ist aber auch möglich, im Bodenbereich und/oder in den Seitenwänden Kühlkanale vorzusehen. In den Kühlplatten oder in den Kühlkanälen oder Kanalrinnen nimmt entweder ein Kühlmittel wie Kühlwasser (Luft-Wärme-Kühler oder Wasser-Wärme-Kühler) oder ein Kältemittel, das durch die Wärme verdampft, (Verdampfer) die Wärme der Batteriezellen auf und führt sie über einen Kühler an die Umgebung oder einen anderen Verbraucher, wie z.B. eine Klimaanlage ab.

Damit ist eine besonders platzsparende Anordnung einer Batterieeinheit für den elektrischen Antriebs zusammen mit dem verbrennungskraftmotorischen Antrieb eines Generators zur Erzeugung elektrischer Energie und gegebenenfalls mit einem Kraftstofftank möglich. Zudem ist dadurch der Kraftstofftank und die Batterieeinheit nicht mehr separat voneinander an dem Fahrgestell des Hybridfahrzeugs anzuordnen, sondern Kraftstofftank, Batterieeinheit sowie verbrennungsmotorischer Antrieb des Generators kann als eine Einheit am Fahrgestell angeordnet werden, so dass der Aufwand zur Integration der Moduleinheit in oder an einem Fahrgestell wesentlich reduziert werden kann. Dadurch können die Sicherheitsmaßnahmen wesentlich reduziert werden, da der Kraftstofftank durch das üblicherweise sehr stabil ausgebildete Moduleinheit mit geschützt ist.

Die Erfindung wird nun anhand der beigefügten Figuren näher erläutert.
**Fig. 1** zeigt eine Prinzipskizze der Anordnung einer Moduleinheit in einem Elektrofahrzeug.
**Fig. 2** zeigt die erfindungsgemäße Moduleinheit.

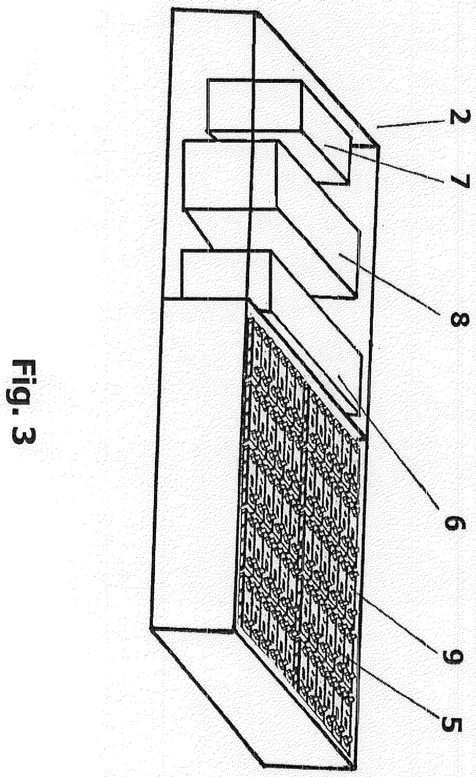

**Fig. 3** zeigt eine weitere Ausführung der Moduleinheit

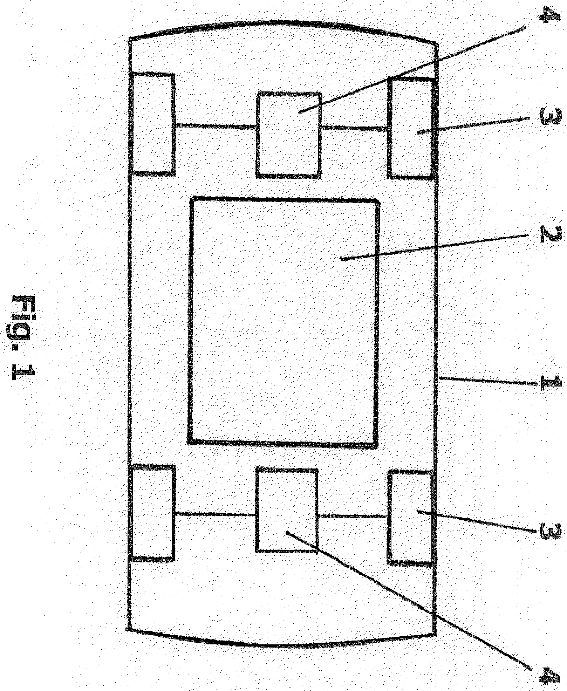

Die Fig. 1 zeigt eine Prinzipskizze der Anordnung einer Moduleinheit 2 in einem Elektrofahrzeug 1, dessen Antriebsleistung nur durch elektrische Maschinen bereitgestellt wird. Die Räder 3 der Vorder- und Hinterachse werden jeweils durch einen Elektromotor 4 angetrieben, die Ihre elektrische Energie aus der Moduleinheit 2 beziehen. Die Moduleinheit 2 ist in diesem Beispiel zwischen Vorder- und Hinterachse unterflur im Unterbodenbereich des Elektrofahrzeugs 1 angeordnet.

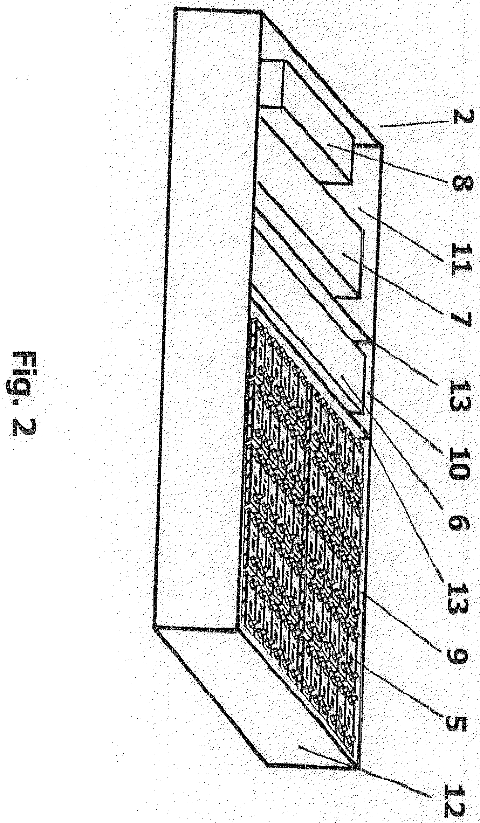

Die Fig. 2 zeigt eine Prinzipdarstellung einer Moduleinheit 2 für den Einbau in ein Elektrofahrzeug 1. Die Moduleinheit 2 ist kastenförmig ausgebildet und besteht aus einem Kastenkörper 12 und einer nicht näher dargestellten Kastenabdeckung. Kastenkörper 12 und Kastenabdeckung weisen in den umlaufenden Randbereichen und in den oberen Randbereichen der Trennwände 13 Aufnahmen für Dichtelemente auf. Kastenkörper und Kastenabdeckung können miteinander verschraubt oder verklemmt werden.

Die Moduleinheit 2 umfasst innerhalb des Kastenkörpers 12 eine Kammer 9 für die Batteriemodule 5, eine Kammer 10 für den Kraftstofftank 6 und eine Kammer 11 für die Verbrennungskraftmaschine/Generatoreinheit 7,8. Der Einfachheit halber sind die Abgasführung der Verbrennungskraftmaschinen 7, Kühlmittelanschlüsse sowie Kabelanschlüsse nicht näher dargestellt.

Die Verbrennungskraftmaschine/Generatoreinheit 7,8 besteht im Wesentlichen aus einen Verbrennungsmotor 7, vorzugsweise einem flachbauenden Zweizylinder-Boxermotor, mit einem auf der einen Seite der Kurbelwelle angeflanschten Generator und einem auf der gegenüberliegenden Seite der Kurbelwelle angeflanschten Lader, vorzugsweise einem Kompressor.

Der Generator 8 tauscht mit Hilfe einer Leistungselektronik über elektrische Verbindungskabel elektrische Energie mit den Batteriemodulen 5 aus bzw. es wird die elektrische Energie direkt zu den Elektromotoren 4 geleitet. Eine Steuereinheit regelt dabei sowohl den Betriebszustand des Generators 8 als auch den Betriebszustand der Batteriemodule 5 und den des Verbrennungsmotors 7. Beim Betrieb des Elektrofahrzeuges 1 wird der Generator 8 als elektromechanische Energiewandler benutzt, um mechanische Energie des Verbrennungsmotors 7 abzugreifen und in Form von elektrischer Energie an die Batteriemodule 5 oder direkt an die Elektromotoren 4 zu transferieren.

Im Start- bzw. Anfahrmodus wird der Verbrennungsmotor 7 bis zum Erreichen der Soll-Betriebstemperatur der Katalysatoren in der Abgasanlage als Luftpumpe betrieben, wobei das Elektrofahrzeug 1 nur mit Hilfe der von den Batteriemodulen 5 entnommenen elektrischen Leistung betrieben wird. Während dieser Zeit erfolgt der Betrieb des Verbrennungsmotors 7 im Schleppbetrieb, d.h., der Verbrennungsmotor 7 wird ohne Verbrennung durch den Generator 8 angetrieben und verdichtet nur die angesaugte Luft, somit werden Verbrennungsmotor 7 und Abgasanlage mit den Katalysatoren auf Soll-Betriebstemperatur gebracht. Erst nach Erreichen der Soll-Betriebstemperatur wird der Verbrennungsmotor 7 im Verbrennungsmodus betrieben.

Bei einem Kaltstart des Verbrennungsmotors 7 ist bis zum Erreichen der Betriebstemperatur der Schadstoffausstoß eines Verbrennungsmotors 7 besonders hoch. Durch die Vorwärmung von Verbrennungsmotor 7, den Katalysatoren und der gesamten Abgasanlage vor der Verbrennung des Kraftstoffs auf die Soll-Betriebstemperatur wird beim Einsetzen der Verbrennung das Abgas sofort wesentlich sauberer, der Schadstoffausstoß verringert sich wesentlich und die Kosten für die Abgasanlage wesentlich günstiger.

In einem weiteren Beispiel ist die Moduleinheit 2 für das Elektrofahrzeug 1 rahmenförmig ausgebildet und weißt eine geschlossene Kammer 9 für die Batteriemodule 5 auf. In Fahrtrichtung ist die rahmenförmige Moduleinheit offen ausgebildet und nimmt in diesem Bereich die Verbrennungskraftmaschine-/ Generatoreinheit 7,8 auf. Gegebenenfalls kann in diesem Bereich auch der Kraftstofftank 6 angeordnet werden.

Dies hat den Vorteil, dass hier luftgekühlte Verbrennungsmotoren eingesetzt werden können. Da die Moduleinheit 2 in diesem Bereich nicht geschlossen ausgeführt ist, kann die Abwärme des Verbrennungsmotor ohne großen Aufwandnach außen abgeführt werden.

Es wird somit ein Elektrofahrzeug zur Verfügung gestellt, dass gegenwärtigen und auch zukünftigen Umweltschutz- und Verbrauchsanforderungen auf kostengünstige Weise gerecht wird.

### Bezugszeichenaufstellung

- 1: - Elektrofahrzeug
- 2: - Moduleinheit
- 3: - Räder
- 4: - Elektromotor
- 5: - Batteriemodule
- 6: - Kraftstofftank
- 7: - Verbrennungskraftmaschine/Verbrennungsmotor
- 8: - Generator
- 9: - Kammer für Batteriemodule
- 10: - Kammer für Kraftstofftank
- 11: - Kammer für Verbrennungskraftmaschine/Generatoreinheit
- 12: - Kastenkörper
- 13: - Trennwand

## Patentansprüche

1. Moduleinheit für Elektrofahrzeuge, die von mindestens einem Elektromotor angetrieben werden, dessen elektrische Energie aus einem elektrischen Speicher (Akku) und durch Umwandlung eines zusätzlich mitgeführten Kraftstoffs bezogen wird, **dadurch gekennzeichnet, dass** die Moduleinheit (2) kastenförmig ausgebildet ist und im Inneren mindestens zwei Kammern umfasst, wobei in einer der Kammern (10) Batteriemodule (5) und in den weiteren der Kammern eine Verbrennungskraftmaschine/Generatoreinheit (7,8) und/oder ein Kraftstofftank (8) angeordnet sind, die einzelnen Kammern der Moduleinheit (2) untereinander fluid- und/oder gasdicht ausgebildet sind und den Kraftstofftank (6) zusammen mit den Batteriemodulen (5) und die Verbrennungskraftmaschine/ Generatoreinheit (7,8) vollständig umschließt.

2. Moduleinheit für Elektrofahrzeuge, die von mindestens einem Elektromotor angetrieben werden, dessen elektrische Energie aus einem elektrischen Speicher (Akku) und durch Umwandlung eines zusätzlich mitgeführten Kraftstoffs bezogen wird, **dadurch gekennzeichnet, dass** die Moduleinheit (2) rahmenförmig ausgebildet ist und mindestens eine geschlossene Kammer zur Aufnahme von Batteriemodule (5) aufweist und im offenen Bereich der Moduleinheit (2) eine Verbrennungskraftmaschine/Generatoreinheit (7,8) und/oder ein Kraftstofftank (8) angeordnet sind.

3. Moduleinheit für Elektrofahrzeuge nach Anspruch 1 oder 2, **dadurch gekennzeichnet, dass** die Verbrennungskraftmaschine (7) als fremdgezündete Hubkolben-Brennkraftmaschine oder als Rotationskolben-Brennkraftmaschine ausgebildet ist.

4. Moduleinheit für Elektrofahrzeuge nach Anspruch 1 oder 2, **dadurch gekennzeichnet, dass** die Verbrennungskraftmaschine (7) als Gasturbine ausgebildet ist.

5. Moduleinheit für Elektrofahrzeuge nach Anspruch 1 oder 2, **dadurch gekennzeichnet, dass** die Moduleinheit (2) unterflur zwischen den Längsträgerstrukturen der Unterbodenstruktur des Elektrofahrzeuges (1) angeordnet ist.

6. Moduleinheit für Elektrofahrzeuge nach Anspruch 1 oder 2, **dadurch gekennzeichnet, dass** die Moduleinheit (2) im Unterbodenbereich des Elektrofahrzeuges (1) zwischen Vorder- und Hinterachse angeordnet ist.

7. Moduleinheit für Elektrofahrzeuge nach Anspruch 1 oder 2, **dadurch gekennzeichnet, dass** die Moduleinheit (2) im Frontbereich des Elektrofahrzeuges (1) angeordnet ist.

8. Moduleinheit für Elektrofahrzeuge nach Anspruch 1 oder 2, **dadurch gekennzeichnet, dass** die Moduleinheit (2) im Heckbereich des Elektrofahrzeuges (1) angeordnet ist.

9. Moduleinheit für Elektrofahrzeuge nach Anspruch 1 oder 2, **dadurch gekennzeichnet, dass** der Moduleinheit (2) eine Temperiereinrichtung zur Kühlung oder bei Bedarf auch zur Beheizung der Batteriemodule (5) zugeordnet ist.

10. Moduleinheit für Elektrofahrzeuge nach Anspruch 1 oder 2, **dadurch gekennzeichnet, dass** in einer der Kammern der Moduleinheit (2) ein thermischer Speicher, insbesondere Wärme- und/oder Kältespeicher angeordnet ist, der bei Bedarf zur Temperierung der Batteriemoduls (5) zuschaltbar ist.

11. Moduleinheit für Elektrofahrzeuge nach Anspruch 1 oder 2, **dadurch gekennzeichnet, dass** den Batteriemodulen (5) Temperatursensoren zugeordnet sind, die mit einem Steuermodul für die Temperiereinrichtung gekoppelt ist.
